# EUROPÄISCHE PATENTANMELDUNG

(11) **EP 1 635 201 A1**
(43) Veröffentlichungstag der Anmeldung: **15.03.2006**
(21) Anmeldenummer: 05107341.9
(22) Anmeldetag: 10.08.2005
(51) Int. Cl.: G02B 6/00, G02F 1/13357, F21V 8/00

(54) **Beleuchtungseinrichtung zur gleichmässigen Hinterleuchtung von Flachbildschirmen, umfassend einen Lichtleiter mit diffraktiven Oberflächenelementen**

(30) Priorität: 09.09.2004 EP 04021429; 19.01.2005 EP 05100313; 10.03.2005 EP 05005303
(71) Anmelder: Nanogate Advanced Materials GmbH, 66121 Saarbrücken (DE)
(72) Erfinder: Klenke, Martin, 66440 Blieskastel (DE)
(74) Vertreter: von Kirschbaum, Alexander

(57) **Zusammenfassung**

Eine Beleuchtungseinrichtung zum Hinterleuchten von Flachbildschirmen, wie Displays für mobile Anwendungen, weist eine Lichtquelle (14) und einen Lichtleitkörper (10) auf. In den Lichtleitkörper (10) wird von der Lichtquelle abgegebenes Licht eingekoppelt. Das Licht wird an einer Austrittsoberfläche (28) des Lichtleitkörpers (10) wieder ausgekoppelt. Erfindungsgemäß ist an der Austrittsoberfläche (28) des Lichtleitkörpers (10) zur Lichtausbreitung eine Oberflächenstruktur mit diffraktiven Oberflächenelementen (30) konstanter Amplitude vorgesehen.

## Beschreibung

Die Erfindung betrifft eine Beleuchtungseinrichtung zum Hinterleuchten von Flachbildschirmen, insbesondere Displays für mobile Anwendungen.

Bekannte Beleuchtungseinrichtungen für Displays für mobile Anwendungen weisen eine Lichtquelle auf, bei der es sich z. B. um eine röhrenförmige Lichtquelle (CCFL) handelt. Das von der Lichtquelle abgegebene Licht wird an einer Stirnseite eines im Querschnitt keilförmigen Lichtleitkörpers in diesen eingekoppelt. Insbesondere auf Grund der keilförmigen Ausgestaltung des Lichtleitkörpers erfolgt eine Totalreflektion der Lichtstrahlen an der Phasengrenze und durch entsprechende Streuzentren ein Austreten der Lichtstrahlen an der Oberfläche des keilförmigen Lichtleitkörpers. Die Oberfläche des keilförmigen Lichtleitkörpers ist hierbei dem zu durchleuchtenden Display gegenüberliegend angeordnet. Die Oberfläche des Lichtleitkörpers ist derart strukturiert, dass durch Refraktion das Licht aus dem Lichtleiter austritt. Das so gebrochene Licht wird durch mehrere Folien, die zwischen dem Lichtleitkörper und der Display angeordnet sind, kollimiert und derart gelenkt, dass ein im Wesentlichen weißes Licht zu dem Display gelangt. Der Aufbau derartiger Beleuchtungseinrichtungen ist kompliziert, zumal mehrere Folien beispielsweise in einen Rahmen oder dgl. eingelegt werden müssen und sichergestellt werden muss, dass ein Verrutschen oder dgl. der Folien vermieden ist. Auf Grund des komplizierten Aufbaus sind die Herstellungskosten hoch. Ferner besteht die Gefahr von Funktionsstörungen.

Aus EP 1 194 915 ist ein Lichtleitkörper für Mobiltelefondisplays bekannt. In den Lichtleitkörper ist Licht einer Lichtquelle, wie einer LED, eingekoppelt. Zum Auskoppeln des Lichtes weist der Lichtleitkörper an einer Oberfläche eine diffraktive Struktur auf. Hierbei ist die gesamte Oberfläche mit unterschiedlichen Gittern versehen, so dass die Gitter unmittelbar aneinander angrenzen. Die Gitter sind hierbei derart ausgebildet, dass sie zur Vergleichmäßigung der Lichtauskopplung eine unterschiedliche Beugungseffizienz aufweisen. Unterschiedliche Beugungseffizienzen einzelner Gitter werden dadurch erzielt, dass die Amplitude der einzelnen Gitter bzw. die Höhe der Struktur variiert. Die Herstellung einer derartigen Oberflächenstruktur mit unterschiedlichen Gitteramplituden ist äußerst schwierig. Ferner sind durch die unmittelbare Nachbarschaft der einzelnen Gitter nur schwer vorhersehbare Beugungseffekte, wie z. B. unerwünschte Interferenzen, auf Grund der technisch schwierig zu gewährleistenden Präzision zu erwarten.

Aufgabe der Erfindung ist es, eine Beleuchtungseinrichtung zum Hinterleuchten von Flachbildschirmen zu schaffen, die eine erhöhte Funktionssicherheit mit hoher Effizienz und geringen Kosten gewährleistet.

Die Lösung der Aufgabe erfolgt erfindungsgemäß durch die Merkmale des Anspruchs 1.

Die erfindungsgemäße Beleuchtungseinrichtung ist insbesondere für Flachbildschirme, wie beispielsweise Displays für Mobiltelefone, PDA-Displays, Kameras etc. geeignet. Ferner ist die Beleuchtungseinrichtung auch zum Hinterleuchten von Werbetafeln, Anzeigetafeln etc. geeignet. Die Beleuchtungseinrichtung weist eine Lichtquelle auf, wobei die Lichtquelle eine oder mehrere LEDs oder CCFLs aufweisen kann. Das von der Lichtquelle abgegebene Licht wird in einen Lichtleitkörper eingekoppelt. Der Lichtleitkörper ist hierbei vorzugsweise aus transparentem Kunststoff, wie PPMA, PC., PET, PE etc., und/ oder einem Mineralglas hergestellt. Das in den Lichtleitkörper eingekoppelte Licht wird an einer Austrittsoberfläche des Lichtleitkörpers ausgekoppelt. Hierbei ist die Austrittsoberfläche bei einer Verwendung der Beleuchtungseinrichtung für ein Mobiltelefon dem Display gegenüberliegend angeordnet, so dass das Licht in Richtung des Displays von dem Lichtleitkörper abgegeben wird. Erfindungsgemäß weist die Austrittsoberfläche zur Lichtausbreitung eine Oberflächenstruktur mit diffraktiven Oberflächenelementen auf. Durch das Vorsehen von vorzugsweise einer Vielzahl von derartigen Oberflächenelementen können die nach dem Stand der Technik zwischen dem Lichtleitkörper und dem Display vorgesehenen Folien entfallen, da auf Grund der erfindungsgemäß diffraktiven Oberflächenelemente eine ausreichend gute Ausleuchtung erzielt werden kann.

Ggf. sind an einer oder mehrer Seitenflächen des Lichtleitkörpers Reflektoren vorgesehen, um die an der Austrittsoberfläche austretende Lichtmenge zu erhöhen. Ebenso kann die Lichtquelle teilweise mit Reflektoren umgeben sein, um die in den Lichtleitkörper eingekoppelte Lichtmenge zu erhöhen.

Mit Hilfe der erfindungsgemäßen Beleuchtungseinrichtung ist es möglich, zwischen der Austrittsoberfläche des Lichtleitkörpers und dem Display des Bildschirms keine weiteren lichtlenkenden Komponenten, wie z. B. Folien, vorzusehen. Abgesehen von den vorstehend beschriebenen Reflexionselementen ist somit erfindungsgemäß eine transflektive oder transmissive Hintergrundbeleuchtung ohne weitere lichtlenkende Komponenten geschaffen. Auf Grund des Vorsehens diffraktiver Oberflächenelemente an der Austrittsaherfläche des Lichtleiterkörpers kann der Aufbau der Beleuchtungseinrichtung vereinfacht werden. Hierdurch ist die Qualität der Beleuchtungseinrichtung und insbesondere die Lebensdauer verbessert.

Vorzugsweise sind die einzelnen Oberflächenelemente derart ausgebildet, dass sie als Beugungselemente wirken, die vorzugsweise ein kollimiertes Lichtbündel mit spektraler Lichtaufspaltung erzeugen. Hierzu weisen die einzelnen Oberflächenelemente vorzugsweise im Querschnitt wellenförmige Oberflächenstrukturen auf, wobei der Welienabstand in Abhängigkeit der auszulenkenden Wellenlänge gewählt ist. Hierbei weisen vorzugsweise einzelne Oberflächenelemente unterschiedliche Beugungsgitter auf. Besonders bevorzugt ist es, dass die Oberflächenelemente derart angeordnet sind, dass durch Überlagerung von mindestens zwei benachbarten Lichtbündeln überwiegend monochromatisches Licht und/ oder weißes Licht entsteht. Hierbei wird unter monochromatischem Licht ein Wellenlängenbereich von 100 nm, insbesondere 50 nm verstanden. Durch das erfindungsgemäße Vorsehen derartiger Oberflächenelemente kann somit ein weitgehend monochromatisches, insbesondere kollimiertes Licht mit hoher Lichtstromdichte erzeugt werden.

Durch die Ausgestaltung der Oberfläche der Oberflächenelemente ist es ferner möglich, die Abstrahlrichtung des Lichts von der Austrittsoberfläche einzustellen. Hierzu ist das an den Oberfiächenelementen vorgesehene Beugungsgitter entsprechend der Fraunhoferschen Beugungsgesetze zu modifizieren. Die Einstellbarkeit liegt hierbei vorzugsweise im Bereich von 0 - 90° zur Austrittsoberfläche.

Ebenso ist es möglich, auf Grund der Wahl bzw. Ausgestaltung der Struktur der Oberflächenelemente die Farbtemperatur des abgestrahlten Lichts einzustellen. Vorzugsweise ist eine Einstellung der Farbtemperatur im Bereich von 3000 K 10.000 K möglich.

Durch die erfindungsgemäße Ausgestaltung der Austrittsoberfläche mit diffraktiven Oberflächenelementen ist insbesondere eine spektrale Aufspaltung vermieden bzw. erheblich reduziert. Ferner ist eine ausreichende Lichtverstärkung bei gleichzeitig geringem Energieverbrauch gewährleistet.

Des weiteren kann auf Grund des Vorsehens der diffraktiven Oberflächenelemente und insbesondere der Anordnung der Oberflächenelemente eine gute Kollimation des Lichts erreicht werden. Hierbei ist es besonders vorteilhaft, dass diese Vorteile ohne das Vorsehen weiterer Lichtlenksysteme, wie z. B. diffraktiv oder refraktiv arbeitender Folien, zur Lichtverstärkung oder Kollimation erzielt werden können.

Die erfindungsgemäßen diffraktiven Oberflächenelemente weisen vorzugsweise eine Größe von 0,04 µm² bis 10.000 µm², insbesondere 0,04 µm² bis 500 µm² auf. Auf Grund des Vorsehens derartig kleiner Oberflächen ist es möglich, auch bei sehr kleinen Flachbildschirmen, wie beispielsweise Displays für mobile Anwendungen, eine Vielzahl von Oberflächenelementen vorzusehen. Hierbei ist der Abstand der einzelnen Oberflächenelemente untereinander vorzugsweise im Bereich von 0 - 100 µm, insbesondere 0 - 50 µm und besonders bevorzugt 0 - 15 µm. Besonders bevorzugt ist es, dass die Oberflächenelemente einen Abstand > 0 zueinander haben. Vorzugsweise beträgt der Abstand mindestens ein 1 µm, insbesondere mindestens 3 µm. Dies hat den Vorteil, dass in Bereichen des Lichtleitkörpers, in denen mehr Licht ausgekoppelt werden soll, der Abstand der Oberflächenelemente verringert und in Bereichen, in denen eine geringere Menge an Licht ausgekoppelt werden soll, ein größerer Abstand vorgesehen werden kann. Hierdurch kann eine gute Vergleichmäßigung der Helligkeitsverteilung erzielt werden. Ferner ist es in der Herstellung einfacher, die einzelnen Oberflächenelemente stets in einem Abstand zueinander anzuordnen.. Werden die Oberflächenelemente beispielsweise durch einen aushärtenden Lack in Verbindung mit einem Abformelement bzw. einem Negativ hergestellt, ist durch das Beabstanden der Oberflächenelemente eine Verfälschung an den Grenzen der Oberflächenelemente, beispielsweise durch das Entstehen von Lackstegen, vermieden. Ferner ist durch die Beabstandung der einzelnen Oberflächenelemente sichergestellt, dass Brechungen oder Verfälschungen der Beugung durch aneinander angrenzende Oberflächenstrukturen vermieden ist.

Vorzugsweise sind mehrere Oberflächenelemente mit unterschiedlichen Oberflächenstrukturen zu einer Oberflächenelement-Gruppe zusammengefasst. Hierbei sind die unterschiedlichen Oberflächenstrukturen derart gewählt, dass von einer Oberflächenelement-Gruppe im Wesentlichen monochromatisches und/ oder weißes Licht abgegeben wird. Die Art der Oberflächenstruktur, insbesondere die durch die Oberflächenstruktur hervorgerufene Wellenlängenänderung des Lichts wird in Abhängigkeit der von der Lichtquelle abgegebenen Wellenlängenbereiche bestimmt,

Vorzugsweise umfasst eine Oberflächenelemente-Gruppe mindestens zwei Oberflächenelemente mit unterschiedlichen Oberflächenstrukturen. Vorzugsweise umfasst die Oberflächenefemente-Gruppe mindestens vier, insbesondere mindestens sechs Oberflächenelemente, die jeweils eine unterschiedliche Oberflächenstruktur aufweisen.

Da die einzelnen Oberflächenelemente gemäß einer bevorzugten Ausführungsform der Erfindung hinsichtlich der Höhe bzw. der Amplitude die selbe Oberflächenstruktur aufweisen, ist die Beugungseffizienz der einzelnen Obei-flächenelemente identisch. Es können lediglich herstellungsbedingte Schwankungen von einigen Prozenten auftreten, die jedoch die Beugungseffizienz nur geringfügig beeinflussen.

Besonders bevorzugt ist es, die einzelnen Oberflächenelemente derart auszubilden, dass die Amplitude der unterschiedlichen Oberflächenstrukturen konstant ist und nur die Frequenz geändert ist. Je nach Art der Oberflächenstruktur, bei der es sich nicht zwingend um eine sinusförmige Oberflächenstruktur handeln muss, sind allgemein ausgedrückt sämtliche Erhöhungen gleich hoch, weisen jedoch unterschiedliche Abstände auf. Dies führt dazu, dass das von der Lichtquelle abgegebene Licht von den einzelnen Oberflächenelementen unterschiedlich gebeugt wird. Vorteilhaft ist hierbei insbesondere, dass eine Variation der Abstände einfacher herstellbar ist als variierende Höhen.

Die vorzugsweise in Oberflächenelemente-Gruppen angeordneten Oberflächenelemente, bei denen es sich beispielsweise um sechs Oberflächenelemente mit unterschiedlicher Oberflächenstruktur handelt, weisen vorzugsweise die selbe Amplitude von 550 nm auf Hierbei weisen die einzelnen Oberflächenelemente einer Oberflächenelementen-Gruppe jeweils eine Frequenz von beispielsweise 490 nm, 503 nm, 517 nm, 530 nm, 575 nm und 620 nm auf. Insbesondere weisen die diffraktiven Oberflächenelemente eine sinusförmige Oberflächenstruktur auf. Der Abstand der einzelnen Oberflächenelemente untereinander liegt vorzugsweise im Bereich von 1 - 100 µm, insbesondere 1 - 50 µm und besonders bevorzugt 1-15 µm.

Die Herstellung derart kleiner Oberflächenstrukturen und Oberflächenelemente ist beispielsweise in EP 05 003 358 beschrieben, auf die hiermit inhaltlich Bezug genommen wird. Ein geeignetes Material zur Herstellung der Oberflächenelemente weist vorzugsweise die folgende Zusammensetzung auf:

11 g 1H,1H,2H,2H-Perfluoroctylacrylat wurden mit 8 g Dipropylenglykoldiacrylat, 0,1 g Irgacure® 819 und 0,2 g Irgacure® 184 der Firma Ciba Spezialitätenchemie Lampersheim GmbH vermischt. 60 µl dieser Mischung wurde auf eine 2 x 2 cm große Nickelplatte aufgebracht, auf deren Oberfläche eine Negativform eines Formkörpers mit Streuzentren ausgebildet ist. Anschließend wurde ein 1 mm dickes und 1 x 1 cm großes Plättchen aus PMMA auf Oberfläche der Mischung auf der Nickelplatte aufgebracht. Daraufhin wurde der so erhaltene Sandwich auf der Nickelplatte mit dem dazwischen befindlichen Gemisch für 2 Sekunden UV-Strahlung einer handlesüblichen UV-Quecksilberlampe ausgesetzt. Anschließend wurde das Substrat mit der damit verbundenen gehärteten Abformzusammensetzung von der Negativ-Gussform entnommen.

Der Lichtleitkörper kann im Querschnitt keilförmig ausgebildet sein. Bevorzugt ist es jedoch, einen quaderförmigen Lichtleitkörper vorzusehen, wobei die Lichteintrittsfläche eine Seitenfläche des Quaders ist. Das Vorsehen eines quaderförmigen Lichtleitkörpers ist auf Grund der durch das erfindungsgemäße Vorsehen der diffraktiven Obcrflächenelemente erzielten guten Lichtausbeute möglich. Hiermit wird eine wesentliche Vereinfachung in der Produktion erreicht. Die Dicke des quaderförmigen Lichtleitkörpers liegt vorzugsweise im Bereich von 0,1 - 3 mm.

Vorzugsweise ist eine Lichtquelle, bei der es sich um ein oder mehrere LEDs und/ oder CCFLs handeln kann, innerhalb und/ oder außerhalb des Lichtleitkörpers angeordnet. Je nach Lage der Lichtquelle bzw. der Lichtquellen erfolgt eine Anordnung der Oberflächenelemente. Durch eine entsprechende Anordnung der Oberflächenelemente kann die an unterschiedlichen Orten der Austrittsoberfläche bestehende unterschiedliche Lichtintensität etc. ausgeglichen werden, so dass an der Austrittsoberfläche von den Oberflächenelementen ein gleichmäßiges, d. h. insbesondere kollimiertes und monochromatisches und/ oder weißes Licht abgegeben wird.

Um die in Richtung der Austrittsoberfläche gelenkte Lichtmenge zu erhöhen, können Reflektoren vorgesehen sein. Diese umgeben beispielsweise die Lichtquelle teilweise. Eine beispielsweise stabförmige Lichtquelle ist vorzugsweise innerhalb des Brennpunktes eines Parabolreflektors angeordnet, Ebenso können zusätzlich oder anstatt des Parabolreflektors mehrere ebene Reflektoren vorgesehen sein. Ferner können an Außenflächen des Lichtleitkörpers, bei dem es sich nicht um die Austrittsoberfläche des Lichtleitkörpers handelt, Reflektoren vorgesehen sein, um einen ungewollten Lichtverlust zu vermeiden. Eine entsprechende Lichtlenkung kann auch durch das Vorsehen von erfindungsgemäßen Oberflächenelementen beispielsweise an Seitenflächen des Lichtleitkörpers erzielt werden. Eine gezielte Lichtlenkung und/ oder Kollimierung und/ oder spektrale Beeinflussung kann ferner auch durch das Vorsehen von erfindungsgemäßen Oberflächenelementen an einer Oberfläche der Lichtquelle erzielt werden.

Zusätzlich oder anstatt des Vorsehens von Oberflächenelementen an einer Austrittsoberfläche des Lichtkörpers können derartige Oberflächenelemente auch auf der gegenüberliegenden, d. h. auf einer Unterseite des Lichtleitkörpers, vorgesehen sein. Das durch die Oberflächenelemente gebeugte Licht wird somit durch den Lichtleitkörper hindurch in Richtung des Displays gelenkt.

Bei einer besonders bevorzugten Ausführungsform der Erfindung nimmt der Abstand benachbarter Oberflächenelemente, die insbesondere an der Austrittsoberfläche oder der gegenüberliegenden Fläche vorgesehen sind, mit einer Vergrößerung des Abstands zur Lichtquelle ab. Hierdurch wird der Tatsache Rechnung getragen, dass die Lichtstärke im Bereich der Lichtquelle größer ist und mit zunehmendem Abstand zur Lichtquelle sinkt. Beispielsweise kann eine innerhalb des Lichtleitkörpers angeordnete Lichtquelle von konzentrischen Kreisen aus Oberflächenelementen umgeben sein, wobei sich der Abstand der Kreise untereinander mit zunehmendem Abstand von der Lichtquelle verringert. Je nach Art der verwendeten Lichtquelle, insbesondere der Abstrahlcharakteristik der Lichtquelle, können darauf abgestimmte unterschiedliche Anordnungen der Obcrflächcnelemente vorteilhaft sein.

Es ist somit eine periodische, aber auch eine aperiodische Anordnung der Oberflächenelemente möglich. Vorzugsweise erfolgt hierbei die Anordnung der Oberflächenelemente in Abhängigkeit der Art und der Lage der Lichtquelle bzw. der Lichtquellen.

Eine bevorzugte Ausführungsform der Erfindung betrifft einen Flachbifdschirm mit einem Flüssigkristall-Element, wie einem LCD-Element. Das Flüssigkristall-Element ist erfindungsgemäß mit einer entsprechend der vorstehenden Beschreibung ausgestalteten Beleuchtungseinrichtung hinterleuchtet.

Bekannte Bildschirm- oder Flüssigkristall-Elemente nach dem Stand der Technik weisen ein Leuchtelement, wie einen Leuchtkasten, auf. In dem Leuchtelement sind als Lichtquellen mehrere Leuchtstoffröhren, insbesondere CCFLs, angeordnet" Zur Vergleichmäßigung des von den Leuchtstoffröhren abgegebenen Lichts und somit zur Vergleichmäßigung der Ausleuchtung des Flüssigkristall-Elementes sind zwischen den Leuchtstoffröhren und dem Flüssigkristall-Element Folien angeordnet. Es handelt sich hierbei um sogenannte BEF- sowie DPEF-Folien. Mit Hilfe einer BEF-Folie soll die Helligkeit verbessert werden. Dies erfolgt durch Vorsehen einer Vielzahl von Prismen auf der Folie. Mit Hilfe der DBFF-Folie wird die Polarität des von der Rückseite des Flussigkristall-Elements reflektierten Lichts geändert und das Licht in Richtung des Fliässigkristall-Elementes zurückgelenkt. Ferner werden zur Veränderung der Polarität PRF-Folien eingesetzt. Das Vorsehen derartiger Folien hat jedoch den Nachteil, dass durch die Folien ein Teil des Lichts absorbiert wird.

Bei dem erfindungsgemäßen Flachbildschirm wird die BEF-Folie und vorzugsweise zusätzlich auch die DBEF-Folie und die PDF-Folie durch den erfindungsgemäß ausgebildeten Lichtleitkörper ersetzt. Als Lichtquelle sind vorzugsweise mehrere Lichtröhren, wie CCFLs, vorgesehen. Vor den Lichtröhren ist ein erfindungsgemäßer Lichtleitkörper angeordnet, der wie vorstehend erläutert, eine Vielzahl von Oberflächenelementen bzw. Oberflächenelementen-Gruppen aufweist. Besonders bevorzugt ist es, dass der Lichtlenkkörper je Lichtröhre eine vorzugsweise parallel zu der Lichtröhre angeordnete Zone mit mehreren Oberflächenelementen bzw. Oberflächenelementen-Gruppen aufweist. Hierbei können die einzelnen Zonen identisch ausgebildet sein. Hierdurch können die Produktionskosten verringert werden.

Vorzugsweise sind die einzelnen Oberflächenelemente bzw. Oberflächenelemente-Gruppen in den einzelnen Zonen zeilen- und spaltenförmig angeordnet. Besonders bevorzugt ist es hierbei, dass sich der Abstand der einzelnen Zeilen zueinander mit zunehmenden Abstand von der Lichtröhre verringert. Hierdurch kann eine Vergleichmäßigung des an der Austrittsoberfläche des Lichtleitkörpers austretenden Lichts, d. h. insbesondere eine Vergleichmäßigung der Helligkeitsverteilung und/ oder eine Vergleichmäßigung der Wellenlängenverteilung erzielt werden. Dies führt dazu, dass die BEF-Folie und ggf. auch die DBEF-Folie sowie die PRF-Folie entfallen können.

Ggf. können die Zonen in einzelne, Unterzonen unterteilt sein. Bei den Unterzonen handelt es sich vorzugsweise um rechteckig ausgebildete Zonen, wobei die Anzahl der Oberflächenelemente bzw, der Oberflächenclemente-Gruppen in Unterzonen, die an dem seitlichen Rand des Lichtlenkkörpers angeordnet sind, größer als in weiter innen liegenden Unterzonen ist. Ferner ist es möglich, anstatt des Vorsehens von Zonen und Unterzonen eine aperiodische Anordnung der Oberflächenelemente bzw. der Oberflächenelemente-Gruppen vorzusehen. Hierbei sind die einzelnen Oberflächenelemente bzw. Oberflächenelemente-Gruppen in Abhängigkeit der Leuchtcharakteristik der Lichtröhren angeordnet. Die Dichte der Oberflächenelemente bzw. der Oberflächenelemente-Gruppen ist vorzugsweise insbesondere in den Ecken und an den Rändern höher.

Nachfolgend wird die Erfindung an Hand einer bevorzugten Ausführungsform unter Bezugnahme auf die anliegenden Zeichnungen näher erläutert.

Es zeigen:
- Fig. 1: eine schematische perspektivische Ansicht einer Beleuchtungseinrichtung,
- Fig. 2: ein Beispiel einer Oberflächenstruktur eines Oberflächenelementes,
- Fig. 3: ein Beispiel einer möglichen Anordnung von Oherflächenelementen,
- Fig. 4: ein Beispiel einer Aufteilung einer Austrittsoberfläche eines Lichtleitkörpers in unterschiedliche Zonen,
- Fig 5: eine erste Tabelle, die die in Fig. 4 dargestellten Zonen beschreibt bzw. definiert,
- Fig. 6: eine zweite Tabelle, die die in Fig. 4 dargestellten Zonen beschreibt bzw. definiert,
- Fig. 7: eine dritte Tabelle, die die in Fig. 4 dargestellten Zonen beschreibt bzw. definiert,
- Fig. 8 u.: 9 schematische Draufsichten weiterer Ausführungsformen von Beleuchtungseinrichtungen,
- Fig. 10: eine schematische Darstellung eines Flachbildschirms in einer Explosionsskizze,
- Fig. 11: eine schematische Draufsicht eines Lichtleitkörpers, der erfindungsgemäß in einen Flachbildschirm einsetzbar ist und

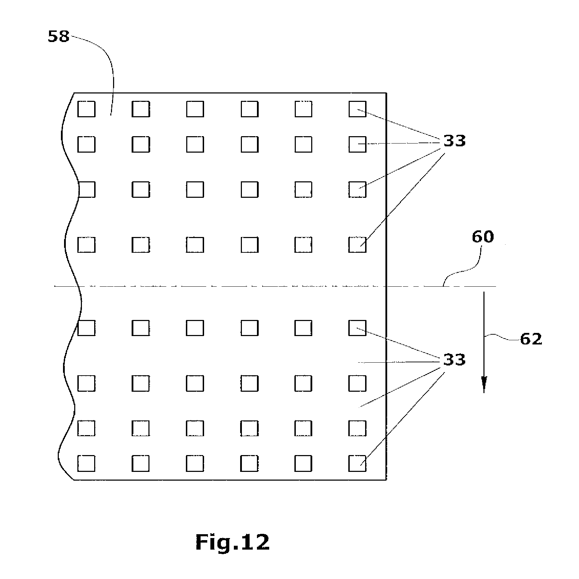

- Fig. 12: eine Vergrößerung eines Teilbereichs des Lichtleitkörpers.

Die erfindungsgemäße Beleuchtungseinrichtung weist einen Lichtleitkörper 10 auf, der im dargestellten Ausführungsbeispiel quaderförmig ist und beispielsweise aus einem transparenten Harz oder einem Kunststoff, wie PPMA oder ähnlichem, besteht. Im dargestellten Ausfuhrungsheispief ist entlang einer Seitenfläche 12 des Lichtleitkörpers 10 eine stabförmige Lichtquelle 14 angeordnet, wobei die Längsachse der Lichtquelle 14 parallel zur Seitenfläche 12 angeordnet ist. Die Lichtquelle 14 ist von einem parabelförmigen Reflektor 16 umgeben, dessen offene Seite in Richtung der Seitenfläche 12 weist. Hierdurch wird die in die Seitenfläche 12 eingekoppelte Lichtmenge erhöht.

Die Lichtquelle 14, bei der sich an Stelle der dargestellten Lichtröhre auch um mehrere LEDs handeln kann, weist vorzugsweise eine Leuchtdichte im Bereich von 20.000 - 50.000 cd/m² auf. Beim Vorsehen einer röhrenförmigen Lichtquelle 14 ist diese vorzugsweise in der Brennachse des parabelförmigen Reflektors 16 angeordnet.

An einer Unterseite 18 des Lichtleitkörpers 10 ist ein Reflektor 20, bei dem es sich um eine Reflektorfolie oder dgl. handeln kann, angeordnet. Ggf. können weitere Reflektoren an den Seitenflächen 22 und/ oder 24 und/ oder 26 angeordnet sein. Anstatt des Vorsehens von Reflektoren können die entsprechenden Flächen auch poliert werden. Ggf. ist ein Aufdampfen einer Reflektionsschicht vorteilhaft.

Auf der Austrittsoberfläche 28 des Lichtleitkörpers 10 befindet sich eine Vielzahl von diffraktiven Oberflächenelementen 30, so dass eine erfindungsgemäße Oberflächenstruktur ausgebildet ist.

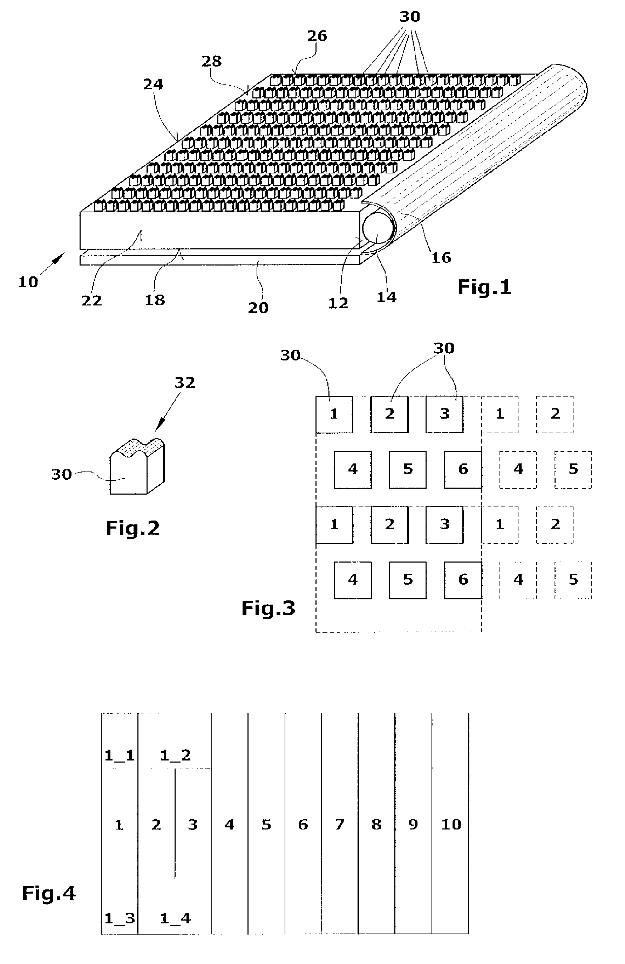

Die einzelnen Oberflächenelemente 30 wirken als Beugungsgitter. Hierbei können unterschiedliche Oberflächenelemente vorgesehen sein, die als lineare Beugungsgitter mit unterschiedlichen Gitterkonstanten ausgebildet sind. Hierbei ist die Oberfläche 32 (Fig. 2) einzelner Oberflächenelemente 30 beispielsweise als Phasen-Sinusgitter ausgebildet. Hierbei weist jedes Oberflächenelement 30 vorzugsweise zwei Sinus-Halbwellen auf.

Die Herstellung der einzelnen Oberflächenelemente 30 und insbesondere der Oberflächenstruktur 32 der Oberflächenelemente 30 erfolgt erfindungsgemäß beispielsweise durch photo-lithographische Verfahren. Ferner können die Oberflächenelemente 30 in besonders bevorzugter Ausgestaltung wie in EP 05 003 358 beschrieben hergestellt werden.

In besonders bevorzugter Ausführungsform der Erfindung sind die einzelnen Oberflächenelemente 30 zu Oberflächenelementen-Gruppen 33 (Fig. 3) zusammengefasst. Im dargestellten Ausführungsbeispiel weist eine Oberflächenelemente-Gruppe 33 sechs Oberflächenelemente 30 auf, die zueinander vorzugsweise auf Lücke und in einem konstanten Abstand zueinander angeordnet sind. Jedes einzelne der Oberflächenelemente 30 weist eine unterschiedliche Oberflächenstruktur auf, so dass eine Oberflächenelementen-Gruppe 33 im Wesentlichen monochromatisches oder weißes Licht abgibt.

Zur Auskopplung von Licht mit unterschiedlicher Wellenlänge sind vorzugsweise unterschiedliche Oberflächenelemente 30, d. h. Oberflächenelemente 30 mit unterschiedlicher Oberflächenstruktur, angeordnet. Beispielsweise handelt es sich hierbei, wie in dem in Fig. 3 dargestellten Ausführungsbeispiel dargestellt, um sechs verschiedene Oberflächenelemente 30, die in Fig. 3 mit 1 bis 6 bezeichnet sind. Wie sich aus Fig. 3 ergibt, sind im dargestellten Ausführungsbeispiel die unterschiedlichen Oberflächenelemente 1 bis 6, die jeweils zur Auskopplung von Licht einer bestimmten Wellenlänge dienen, in einer sich wiederholenden Struktur angeordnet.

Die Oberflächenelemente 30 sind im dargestellten Ausführungsbeispiel quadratisch und haben eine Kantenlänge von ca. 15 µm.

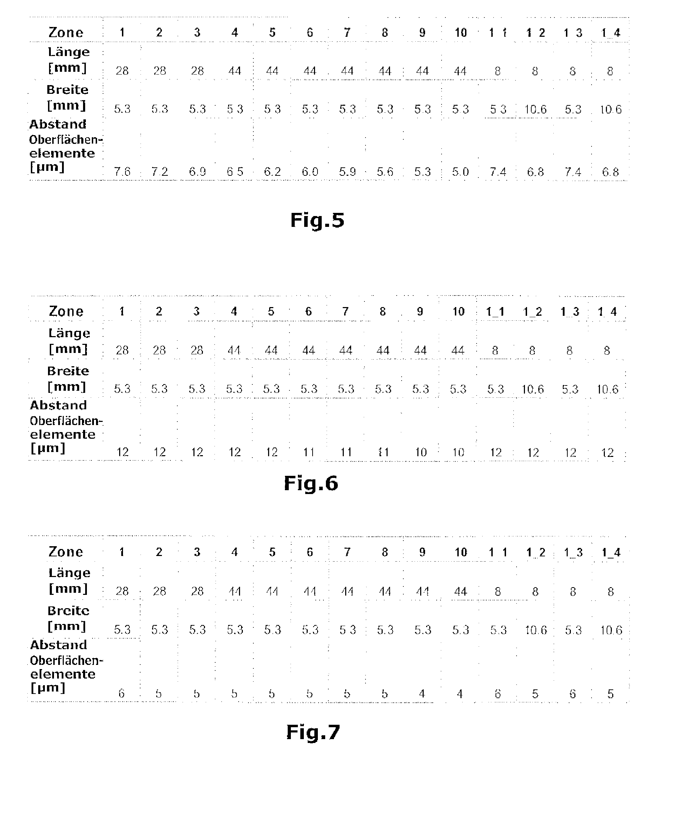

Bei einer besonders bevorzugten Ausführungsform (Fig. 4) sind die einzelnen Oberflächenelemente 30 in Zonen angeordnet. Die Zonen sind in Fig. 4 mit 1 bis 10 sowie mit 1_1 bis 1_4 bezeichnet. Die Abmessungen der Zonen sowie der Abstand der Oberflächenelemente innerhalb der Zonen ist aus der in Fig. 5 dargestellten Tabelle ersichtlich.

In dem in Fig. 4 und 5 dargestellten Ausführungsbeispie! ist die Lichtquelle in Fig. 4 auf der linken Seite, d. h. neben der mit 1 bezeichneten Zone, angeordnet. Ausgehend von der Lichtquelle nimmt der Abstand der einzelnen Oberffächenelemente 30 stufenweise mit zunehmendem Abstand von der Lichtquelle untereinander ab. Innerhalb der einzelnen Zonen bzw. Bereiche weisen die Oberflächenelemente einen konstanten Abstand auf. Es ist jedoch auch möglich, dass die Oberflächenelemente innerhalb einer Zone unterschiedliche Abstände aufweisen. Insbesondere kann der Abstand in Längsrichtung, d.h. in Fig. 4 von links nach rechts, gegenüber dem Abstand senkrecht zur Längsrichtung variieren.

Mit Hilfe der Simulationssoftware "Light Tools" von der Fa. ORA wurde eine Beleuchtungseinrichtung wie anhand der Fign. 1 bis 5 beschrieben, mit den in Fig. 4 und 5 definierten Zonen nachgebildet und Messungen hinsichtlich der Homogenität, der Farbe, der Leuchtdichte, der Beleuchtungsstärke sowie der Kollimation durchgeführt. Die entsprechenden Messungen erfolgten an neun Punkten, die in den Ecken, den Kantenmitten mit ca. 2 mm Kantenabstand und im Zentrum des Lichtleiters liegen.

Bei einer Anordnung der Oberflächenelemente wie anhand der Fign. 4 und 5 definien, führte die durchgeführte Simulation zu folgenden Ergebnissen:
Homogenität: 91%
Farbe: weiss
mittlere Beleuchtungsstärke: 1.600 Lux
mittlere Leuchtdichte: 2950 Nits
Kollimationsrichtung: 17°

Bei einer weiteren Simulation wurden die Abstände zwischen den Oberflächenelementen 30 in den einzelnen Zonen (Fig. 4), wie Fig. 6 entnehmbar, definiert.

Hierbei wurden die folgenden Ergebnisse ermittelt:
Homogenität: 86%
Farbe: neutral (leicht blau)
mittlere Bcleuchtungsstärke: 1000 Lux
mittlere Leuchtdichte: 1900 Nits
Kollimationsrichtung: 17°
   Bei einer weiteren Simulation wurden die Abstände zwischen den Oberflächenelementen 30 in den einzelnen Zonen (Fig. 6), wie Fig. 7 entnehmbar, definiert.

Hierbei wurden die folgenden Ergebnisse ermittelt:
Homogenität: ca. 78%
Farbe: weiss
mittlere Beleuchtungsstärke: 1050 Lux
mittlere Leuchtdichte: 1850 Nits
Koflimationsrichtung: 17°

Bei einer weiteren Untersuchung wurden die Zonen 8, 9 und 10 weggelassen und somit ein kürzerer Lichtleitkörper 10 untersucht, in den das Licht ebenfalls entsprechend dem in Fig. 4 dargestellten Lichtkörper von links eingekoppelt wurde. Der hier untersuchte Lichtleitkörper hatte somit Abmessungen von ca. 36 mm (Länge) und 44 mm (Breite), wobei die Länge in Richtung der Zonen, d.h. in Fig. 4 von links nach rechts gemessen ist. Die Abstände der einzelnen Oberflächenelemente innerhalb der Zonen entsprachen denen in Fig. 5 definierten für die Zonen 1 bis 6, die Zonen 1 1, 1 2, 1 3 und 1 4. Hierbei wurden folgende Ergebnisse gemessen:
Homogenität: ca. 88%
Farbe: weiss
mittlere Beleuchtongsstärke: 1100 Lux
mittlere Leuchtdichte: 2150 Nits
Kollimationsrichtung: 17°

Bei weiteren Untersuchungen wurde die Oberfläche des Lichtleitkörpers 10 nicht in Zonen unterteilt, sondern ein konstanter Abstand der einzelnen Oberflächenelemente gewählt. Hierbei konnten die folgenden Ergebnisse ermittelt werden:
Abstand: 4 µm
Homogenität: ca. 75%
Farbe: weiss
mittlere Beleuchtungsstärke: 1850 Lux
mittlere Leuchtdichte: 3350 Nits
Kolfimationsric.htung: 17°
Abstand: 6 µm
Homogenität: ca. 78%
Farbe: weiss
Beleuchtungsstäi-ke: 1600 Lux
Leuchtdichte: 2400 Nits
Kollimationsrichtung: 17°
Abstand: 8 µm
Homogenität: ca. 82%
Farbe: weiss
mittlere Beleuchtungsstärke: 1400 Lux
mittlere Leuchtdichte: 2500 Nits
Kollimationsrichtung : 17°
Abstand: 10 µm
Homogenität: ca. 84%
Farbe: weiss
mittlere Befeuchtungsstärke: 1200 Lux
mittlere Leuchtdichte: 2200 Nits
Kollimationsrichtung: 17°
Abstand: 11 µm
Homogenität: ca. 87%
Farbe: weiss
mittlere Beleuchtungsstärke: 1200 Lux
mittlere Leuchtdichte: 2150 Nits
Kollimationsrichtung : 17°

Aus den vorstehenden Untersuchungsergebnissen können die folgenden Schlussfolgerungen gezogen werden:
1. Durch die Anordnung und Verteilung der diffraktiven Oberflächenelemente ist es möglich hohe Homogenitäten hinsichtlich der Lichtverteilung einzustellen
2. Auch bei relativ schlechter angeordneten Oberflächenanordnungen mit geringerer Homogenität ist die Farbmischung zu weiss stets gegeben.
3. Die Kollimationsrichtung ist unabhängig von der Verteilung der Oberflächenelemente einstellbar
4. Die Lichtintensität ist eine Funktion des Abstandes der Dots untereinander

Insbesondere bei der Verwendung der erfindungsgemäßen Beleuchtungseinrichtung als Backlight für Mobiltelefone, bei welchen eine Homogenität von 75% oder mehr akzeptabel ist, wird eine für den Benutzer angenehme und hochqualitative Beleuchtung eines Displays ermöglicht. Insbesondere gezielte Kollimationsrichtongen in Verbindung mit voreingestellter Farbetemperatur sind ohne die Zuhilfenahme von lichtlenkenden Folien herstellbar. Damit ist eine weitere Miniaturisierung des Gesamtsystems bei gleichzeitig geringerer Komponentenanzahl und hoher Flexibilität des Layouts ermöglicht.

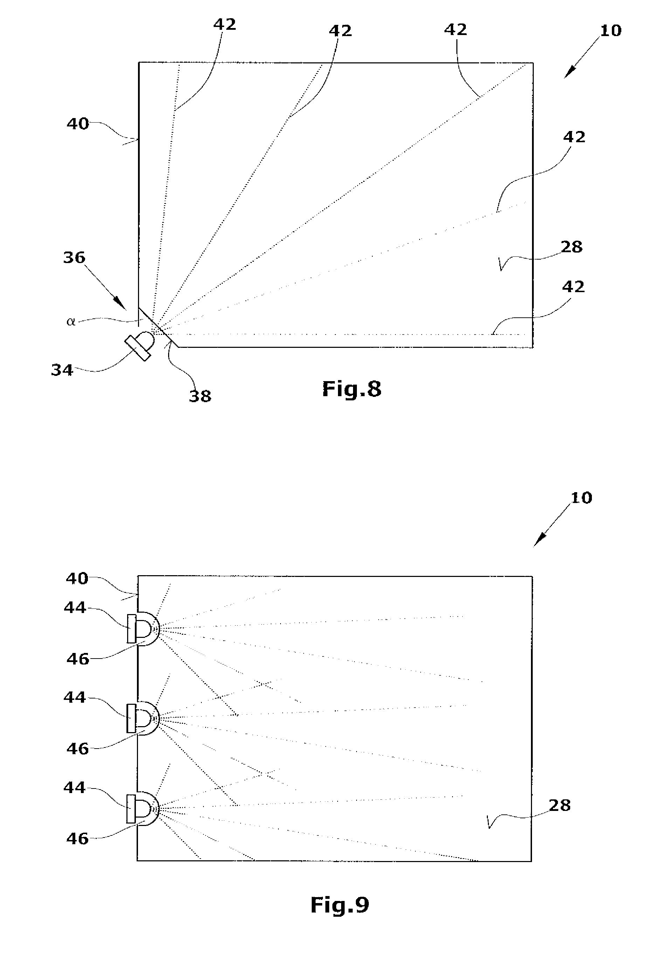

In den Fig. 8 und 9 sind zwei weitere Ausführungsformen von Beleuchtungseinrichtungen dargestellt, die insbesondere auch als Backlight für Mobiltelefone geeignet sind.

Die Lichtleitkörper 10 sind prinzipiell wie an Hand der vorstehenden Figuren beschrieben ausgebildet. Bei den Lichtquellen handelt es sich um LEDs. Bei dem in Fig. 8 dargestellten Ausführungsbeispiel ist eine einzige LED 34 in einer Ecke des Lichtleitkörpers 10 angeordnet. Hierbei ist die entsprechende Ecke 36 vorzugsweise abgeschrägt, so dass die Austrittsseite der LED 34 innerhalb der Ecke angeordnet bzw. innerhalb des rechteckigen Lichtleitkörpers 10 vorgesehen ist. Hierdurch wird das Licht über eine abgeschrägte Fläche 48 in den Lichtleitkörper 10 eingekoppelt. Da der Lichtleitkörper 10 nicht quadratisch, sondern üblicherweise rechteckig ausgebildet ist, ist die Abschrägung nicht in einem 45°-Winkel, sondern vorzugsweise derart vorgenommen, dass ein Winkel α zwischen der Schmalseite 40 und der schrägen Fläche 38 kleiner als 45° ist.

Im dargestellten Ausführungsbeispiel ist die Anordnung der einzelnen Oberflächenelemente bzw. der einzelnen Oberflächenelemente-Gruppen derart angeordnet, dass eine möglichst gleichmäßige Auskopplung des Lichts erfolgt. Hierbei ändert sich der Abstand der einzelnen Oberflächenelemente bzw. Oberflächenelemente-Gruppen in Richtung der gestrichelten Linien 42 derart, dass sich der Abstand der einzelnen Elemente bzw. Gruppen mit einer Vergrößerung des Abstandes von der LED 34 verringert.

Die in Fig. 9 dargestellte Ausführungsform der Beleuchtungseinrichtung weist als Lichtquellen ebenfalls LEDs 44 auf, wobei im dargestellten Ausführungsbeispiel drei LEDs 44 an einer Schmalseite 40 des Lichtleitkörpers 10 angeordnet sind. Hierbei weist der Lichtleitkörper 10 an der Schmalseite 40 vorzugsweise Einbuchtungen 46 auf. Die Einbuchtungen 46 sind vorzugsweise halbkreisförmig ausgebildet. Im dargestellten Ausführungsbeispiel erstrecken sich die Ausbuchten 46 über die gesamte Dicke des Lichtleitkörpers 10. Es ist ebenso möglich, beispielsweise halbkugelförmige Ausbuchtungen vorzusehen, wobei der Kugeldurchmesser geringer als die Dickes des Lichtleitkörpers 10 ist.

Bei diesem Ausführungsbeispiel sind die Oberflächenelemente bzw. die Oberflächenelemente-Gruppen wiederum derart angeordnet, dass eine Vergleichmäßigung der Helligkeitsvertellung an der Austrittsoberfläche 28 gegeben ist.

Selbstverständlich können die unterschiedlichen beschriebenen Ausführungsformen miteinander kombiniert werden. Beispielsweise können an mehreren Seiten LEDs vorgesehen sein. Insbesondere sind mehrere LEDs um den gesamten Umfang des Lichtleitkörpers 10 angeordnet. Ebenso ist eine Kombination der in den Fig. 8 und 9 beschriebenen Ausführungsform möglich. Insbesondere kann es auch zweckmäßig sein, LEDs zusammen mit einer oder mehreren CCFL-Röhren zu kombinieren. Beispielsweise kann die in Fig. 1 dargestellte Beleuchtungseinrichtung derart modifiziert werden, dass in den beiden der CCFL-Röhre 14 gegenüberliegenden Ecken jeweils eine LED, insbesondere wie in Fig. 8 dargestellt, vorgesehen ist. Hierdurch kann auf einfache Weise ein gutes Ausleuchten dieser beiden Ecken, die einen großen Abstand zu der CCFL-Röhre 14 aufweisen, gewährleistet werden.

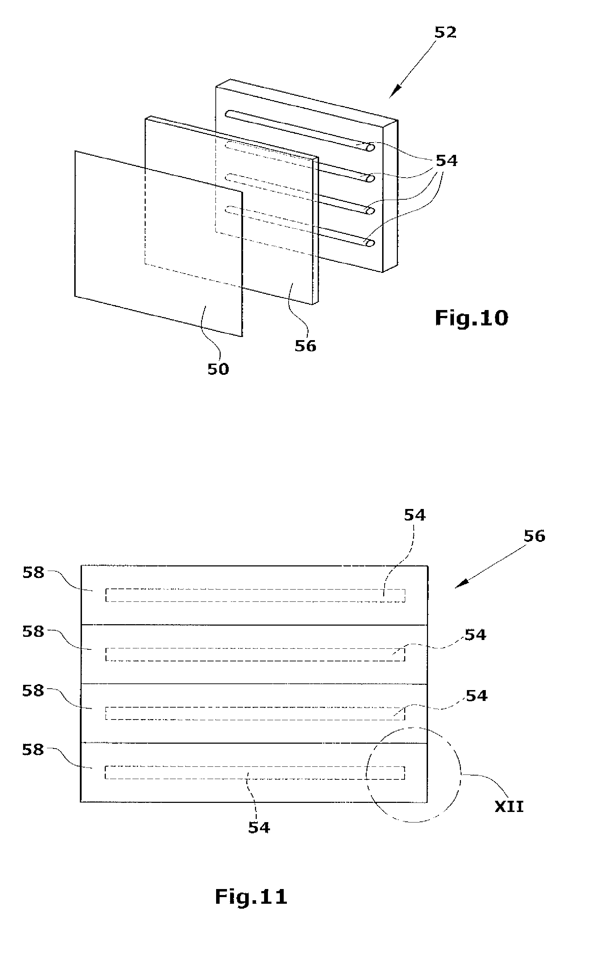

Bei einer bevorzugten Anwendung der erfindungsgemäßen Beleuchtungseinrichtung ist diese in einem Flachbildschirm angeordnet. Das wesentlichen Element eines Flachbildschirms ist ein Flüssigkristall-Element 50 (Fig. 10). Bei dem Flüssigkristall-Element handelt es sich üblicherweise um ein LCD-Element. Ferner ist als Lichtquelle 52 ein Lichtkasten oder dgl. vorgesehen, wobei dieser mehrere parallel zueinander angeordnete Lichtröhren 54 aufweist. Bei den Lichtröhren 54 handelt es sich vorzugsweise um CCFLs.

Gemäß dem Stand der Technik sind zwischen dem Lichtkasten 52 und dem Flüssigkristafl-Eiement 50 mehrere Folien angeordnet. Hierbei handelt es sich sogenannte BEF-, DBEF- und PRF-Folien.

Erfindungsgemäß ist zumindest die BEF-Folie durch einen Lichtleitkörper 56 ersetzt. Der Lichtleitkörper 56 ist prinzipiell wie vorstehend insbesondere an Hand der Fig. 1 - 3 beschrieben aufgebaut.

Der Lichtleitkörper 56 weist vorzugsweise mehrere horizontal bzw. parallel zu den Lichtröhren 54 ausgerichtete Zonen 58 auf. Hierbei ist vorzugsweise jede Zone 58 einer Lichtröhre 54 zugeordnet, wobei die Lichtröhre 54 mittig hinter der Zone 58 angeordnet ist. Vorzugsweise sind die Zonen 58 identisch aufgebaut, d. h. jede Zone weist eine identische Anordnung an Oberflächenelementen bzw. Oberflächenelementen-Gruppen auf.

Eine bevorzugte Anordnung von Oberflächenelementen-Gruppen 33 ist in Fig,. 12 dargestellt. Hierbei sind die einzelnen Oberflächenelemente-Gruppen 33 zu einer Mittelinie 60 symmetrisch angeordnet. Ausgehend von der Mittellinie 60 nimmt der Abstand der einzelnen Oberflächenelemente-Gruppen 33 zueinander in Richtung eines Pfeils 62, d. h. nach außen, ab.

Im dargestellten Ausführungsbeispiel sind die Oberflächenelementen-Gruppen 33 in Zeilen und Spalten angeordnet, wobei der Abstand der Spalten konstant ist. Bei einer Weiterbildung der Erfindung können die Zonen 58 in vorzugsweise rechteckige Unterzonen eingeteilt werden. Diese sind in Fig. 2 sodann nebeneinander angeordnet. Hierbei ist es möglich, innerhalb der einzelnen Unterzonen beispielsweise unterschiedliche Spaltenabstände vorzusehen, wobei die an einem Rand, d. h. in Fig" 12 links oder rechts an der Zone 58 vorgesehenen Unterzonen vorzugsweise geringere Spaltenabstände aufweisen.

Anstelle oder zusätzlich eines Lichtkastens 52 (Fig. 10) können beispielsweise auch vier oder mehr Lichtröhren 54 vorgesehen sein, die am Umfang des Lichtleitkörpers 56 angeordnet sind, so dass das Licht seitlich in den Lichtleitkörper 56 eingestrahlt wird. Die Anordnung der Oberflächenelemente bzw. der Oberflächenelementen-Gruppen ist hierbei wiederum derart vorgenommen, dass von dem Lichtleitkörper in Richtung des LCD-Elementes eine möglichst gleichmäßige Verteilung der Helligkeit gegeben ist. Vorzugsweise nimmt hierbei der Abstand der einzelnen Oberflächenelemente bzw. Oberflächenelementen-Gruppen in Richtung des Zentrums des Lichtleitkörpers ab. Ebenso ist es möglich, dass die Oberfläche des Lichtleitkörpers in vier Zonen bzw. Segmente, vorzugsweise vier identische rechteckige Segmente unterteilt ist, wobei diese vorzugsweise jeweils punktsymmetrisch zum Mittelpunkt des Lichtleitkörpers aufgebaut sind.

## Patentansprüche

1. Beleuchtungseinrichtung zum Hinterleuchten von Flachbildschirmen, insbesondere Displays für mobile Anwendungen, mit
einer Lichtquelle (14) und
einem Lichtleitkörper (10), in dem von der Lichtquelle (14) abgegebenes Licht eingekoppelt und an einer Austrittsoberfläche (28) ausgekoppelt wird,
wobei die Austrittsoberfläche (28) zur Lichtausbreitung diffraktive Oberflächenelementen (30) aufweist,
**dadurch gekennzeichnet, dass**
sämtliche Oberflächenelemente (30) eine Oberflächenstruktur mit konstanter Ampfitode aufweisen.

2. Beleuchtungseinrichtung nach Anspruch 1, **dadurch gekennzeichnet, dass** die einzelnen Oberflächenelemente (30) als Beugungseiemente wirken, die ein kollimiertes Lichtbündel mit spektraler Lichtaufspaltung erzeugen.

3. Beleuchtungseinrichtung nach Anspruch 1 oder 2, **dadurch gekennzeichnet, dass** die Oberflächenelemente (30) derart angeordnet sind, dass durch Überlagerung von mindestens zwei benachbarten Lichtbündeln monochromatisches Licht und/ oder weißes Licht entsteht.

4. Beleuchtungseinrichtung nach einem der Ansprüche 1 - 3, **dadurch gekennzeichnet, dass** die Oberflächenelemente (30) eine Größe von 0,04 - 10.000 µm², insbesondere 0,04 - 500 µm² aufweisen.

5. Beleuchtungseinrichtung nach einem der Ansprüche 1 - 4, **dadurch gekennzeichnet, dass** die einzelnen Oberflächenelemente (30) untereinander einen Abstand von 1 - 100 µm, insbesondere 1 ― 50 µm und besonders bevorzugt 1-15 µm aufweisen.

6. Beleuchtungseinrichtung nach einem der Ansprüche 1 ―5, **dadurch gekennzeichnet, dass** der Abstand benachbarter Oberflächenelemente (30) mit einer Vergrößerung des Abstandes zur Lichtquelle (14) abnimmt.

7. Beleuchtungseinrichtung nach Anspruch 6, **dadurch gekennzeichnet, dass** der Abstand benachbarter Oberflächenelemente (30) stufenweise abnimmt.

8. Beleuchtungseinrichtung nach einem der Ansprüche 1 - 7, **dadurch gekennzeichnet, dass** die Oberflächenelemente (30) aperiodisch angeordnet sind.

9. Beleuchtungseinrichtung nach einem der Ansprüche 1 - 8, **dadurch gekennzeichnet, dass** die Austrittsoberfläche (28) Bereiche aufweist, innerhalb derer die Oberflächenelemente (30) den selben Abstand haben.

10. Beleuchtungseinrichtung nach einem der Ansprüche 1 - 9, **dadurch gekennzeichnet, dass** die Lichtquelle (14) innerhalb und/ oder außerhalb des Lichtleitkörpers (10) angeordnet ist.

11. Beleuchtungseinrichtung nach einem der Ansprüche 1 - 10, **dadurch gekennzeichnet, dass** zur Verbesserung der Einkopplung des Lichts die Lichtquelle (14) teilweise von Reflektoren umgeben ist.

12. Beleuchtungseinrichtung nach Anspruch 11, **dadurch gekennzeichnet, dass** ein parabelförmiger Reflektor vorgesehen ist und die insbesondere als Leuchtstoffröhre ausgebildete Lichtquelle (14) im Brennpunkt angeordnet ist.

13. Beleuchtungseinrichtung nach einem der Ansprüche 1 - 12, **dadurch gekennzeichnet, dass** mindestens eine Seitenfläche des Lichtleitkörpers (10), bei der es sich nicht um die Austrittsoberfläche handelt, mit einem Reflektor versehen ist und/ oder eine reflektierende Oberfläche aufweist.

14. Beleuchtungseinrichtung nach einem der Ansprüche 1 - 11, **dadurch gekennzeichnet, dass** die Lichtquelle eine oder mehrere LEDs aufweist.

15. Beleuchtungseinrichtung nach einem der Ansprüche 1 - 14, **dadurch gekennzeichnet, dass** der Lichtleitkörper (10) quaderförmig ist.

16. Beleuchtungseinrichtung nach einem der Ansprüche 1 - 15, **dadurch gekennzeichnet, dass** der Lichtleitkörper (10) keilförmig ist, wobei die Lichtquelle (14) an einer Schmalseite des Keils angeordnet ist.

17. Beleuchtungseinrichtung nach einem der Ansprüche 1 ― 16, **dadurch gekennzeichnet, dass** mehrere, vorzugsweise mindestens zwei, insbesondere mindestens vier und besonders bevorzugt mindestens sechs Oberflächenelemente (30) zu einer Oberflächenelementen-Gruppe (33) zusammengefasst sind, wobei die Oberflächenelementen-Gruppe (33) monochromatisches und/ oder weißes Licht abgibt.

18. Flachbildschirm, mit einem Flüssigkristall-Element (50) und einer das Flüssigkeitskristall-Element hintenleuchteten Beleuchtungseinrichtung nach einem der Ansprüche 1 - 17.

19. Flachbildschirm nach Anspruch 18, **dadurch gekennzeichnet, dass** als Lichtquelle mehrere insbesondere parallel zueinander angeordnete Lichtröhren (54) vorgesehen sind und der Lichtlenkkörper (56) je Lichtröhre (54) eine vorzugsweise parallel zu der Lichtröhre (54) angeordnete Zone (58) mit Oberflächenelementen (30) und/ oder Oberflächenelementen-Gruppen (33) aufweist.

20. Flachbildschirm nach Anspruch 19, **dadurch gekennzeichnet, dass** die Oberflächenelemente (30) und/ oder die Oberflächenelementen-Gruppen (33) in einer Zone (58) zeilen- und spaltenförmig angeordnet sind, wobei sich der Abstand der Zeilen vorzugsweise mit zunehmendem Abstand zur Lichtröhre (54) verringert.

21. Flachbildschirm nach Anspruch 19 oder 20, **dadurch gekennzeichnet, dass** die Anordnung der Oberflächenelemente (30) bzw. der Oberflächenelemente--Gruppen (33) je Zone (58) zu einer Mittelinie (60) symmetrisch ist, wobei die Mittellinie (60) vorzugsweise im kürzesten Abstand zu der Lichtröhre (54) angeordnet ist.

22. Flachbildschirm nach einem der Ansprüche 19 - 21, **dadurch gekennzeichnet, dass** die Zonen (58) in Unterzonen unterteilt sind, wobei die Unterzonen vorzugsweise rechteckig ausgebildet sind.

23. Flachbildschirm nach Anspruch 22, **dadurch gekennzeichnet, dass** seitlich am Rand angeordnete Unterzonen mehr Oberflächenelemente (30) bzw. Oberflächenelemente-Gruppen (33) als die übrigen Unterzonen aufweisen.
